(19) Europäisches Patentamt
European Patent Office
Office européen des brevets

(11) EP 0 884 586 A2

(12) **EUROPÄISCHE PATENTANMELDUNG**

(43) Veröffentlichungstag:
16.12.1998 Patentblatt 1998/51

(51) Int. Cl.⁶: $G01N\ 27/26$, $H01M\ 10/48$

(21) Anmeldenummer: 98109733.0

(22) Anmeldetag: 28.05.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 08.06.1997 DE 19724007
19.11.1997 DE 19751126

(71) Anmelder:
WINSEL, August, Prof. Dr.
D-65779 Kelkheim (DE)

(72) Erfinder:
• Winsel, August, Prof. Dr.
65779 Kelkheim/Ts. (DE)
• Sauer, Hans
65510 Idstein-Walsdorf (DE)

(74) Vertreter:
Specht, Peter, Dipl.-Phys. et al
Loesenbeck, Stracke, Loesenbeck,
Patentanwälte,
Jöllenbecker Strasse 164
33613 Bielefeld (DE)

(54) **Lineares elektrochemisches Funktionselement**

(57) Die Erfindung beinhaltet lineare elektrochemische Funktionselemente, die aus streifenförmigen, an den Enden zugänglichen Ionenaustauscher-Membranen (IAM) und/oder Wasserstoffdiffusionselektroden bestehen, die allseitig von einem Mantel aus einem festen Material isolierend eingeschlossen sind. Die Erfindung beschreibt den Aufbau, die Herstellung und die Verwendung der Funktionselemente in der elektrochemischen Meßtechnik. Dargestellt wird ferner eine Ladezustandsanzeige, die durch den Einbau einer Blei/Bleisulfathalbzelle in eine Blei/Bleidioxydzelle zustande kommt. Diese Ankopplung erfolgt über ein lineares Funktionselement in Form einer eingespannten Ionenaustauschermembran. Sie ermöglicht die Messung von drei Spannungswerten an der Zelle und deren Auswertung zur Bestimmung des aktuellen Ladungszustandes nach im übrigen bekannten Methoden.

Fig. 3

EP 0 884 586 A2

**Beschreibung**

Gegenstand der vorliegenden Erfindung sind lineare elektrochemische Funktionselemente, ein Verfahren zur Fertigung einer Halbzelle für eine Ladezustandsanzeigevorrichtung mit einem der linearen elektrochemischen Funktionselemente und die Verwendung einer Ladezustandsanzeige mit einem linearen elektrochemischen Funktionselement nach einem der vorstehenden Ansprüche zur Regelung eines Akkumulators.

Das Haupteinsatzgebiet der im folgenden zu beschreibenden linearen erfindungsgemäßen elektrochemischen Funktionselemente ist die elektrochemische Meßtechnik, insbesondere mit Wasserstoffelektroden.

Aus der DE-PS 41 12 784.6 und der entsprechenden internationalen Anmeldung PCT/EP92/00597 ist eine Wasserstoff-Stabelektrode mit integrierter Wasserstoffquelle bekannt. In diesen Schritten wird eine Wasserstoffentwicklungszelle nach Art der DE-PS 35 32 335 benutzt, um eine Wasserstoffdiffusionselektrode mit Wasserstoff zu versorgen. Dort werden zwei Konstruktionen beschrieben, die sich hinsichtlich der aktiven Meßelektrode unterscheiden.

Ausgehend von diesem Stand der Technik schafft die Erfindung ein elektrochemisches Funktionselement, welches z.B. als (bzw. bei) Referenzelektrode(n) zum Abgriff von Äquipotentialflächen, beispielsweise in elektrochemischen Zellen, auch bei beengten Einbauverhältnissen nutzbar ist (zur Definition des Begriffes der Referenz- bzw. Bezugselektrode wird auf das "RÖMPP CHEMIE LEXIKON", 9. Auflage, verwiesen.)

Das erfindungsgemäße lineare elektrochemische Funktionselement weist einen an den Enden zugänglichen elektrochemischen Funktionselement-Streifen mit einer ionen- und/oder elektronenleitenden Struktur auf, der vorzugsweise von einem Mantel bzw. einer Mantelfläche aus einem festen Material isolierend umgeben bzw. eingeschlossen ist.

So besteht der Funktionselement-Streifen nach einem bevorzugten Ausführungsbeispiel der Erfindung aus einer streifenförmigen, an den Enden zugänglichen Ionenaustauschermembran (IAM). Nach einer weiteren Variante wird er aus einer streifenförmigen, an den Enden zugänglichen Wasserstoffdiffusionselektrode gebildet. Bei einer dritten Variante der Erfindung besteht er schließlich aus einer streifenförmigen, an den Enden zugänglichen Halbzelle, gebildet aus einer Ionenaustauschermembran und einer Wasserstoffdiffusionselektrode.

Der den Funktionselement-Streifen allseitig (aber vorzugsweise ohne Deck- und Grundfläche) umschließende Mantel besteht beispielsweise aus einem Metall mit passivierter Oberfläche oder aus einem Kunstharz, zum Beispiel aus einem Gießharz.

Weitere vorteilhafte Varianten der Erfindung sind den übrigen Unteransprüchen zu entnehmen.

Vorteilhafte Anwendungsgebiete der erfindungsgemäßen linearen elektrochemischen Funktionselemente sind die Bildung von Meßelektroden (Ansprüche 8 und 9) sowie elektrochemische Zellen, dabei insbesondere die Messung des pH-Wertes und/oder die Konzentration der Lösung, in einem elektrochemischen Objekt mit einer eigenen Elektrode als Halbzelle und einer Referenzelektrode in Gestalt einer Wasserstoff-Stabelektrode mit integrierter Wasserstoffquelle (Ansprüche 10 bis 13).

Besonders geeignet sind die erfindungsgemäßen linearen elektrochemischen Funktionselemente ferner zur Bildung einer Ladezustandsanzeige für Bleiakkumulatorzellen. Nach einer Idee der Erfindung taucht dabei das erste Ende des linearen Funktionselementes mit einer Öffnung als galvanischer Schlüssel in den Elektrolyten der Akkumulatorzelle und das zweite Ende des linearen Funktionselementes mündet in den Elektrolyten einer Halbzelle, wobei die Halbzelle die Komponenten einer Bleielektrode enthält und aus einem Bleigitter als Ableiter, negativer poröser Masse und Schwefelsäure als Elektrolyt besteht, und wobei die Spannung zwischen dem Ableiter der Halbzelle und einer der Elektroden der Akkumulatorzelle als Rechenwert zur Bestimmung des Ladezustandes der Akkumulatorzelle gemessen wird. Vorteilhafte Varianten dieser Idee sind in den Ansprüchen 14 bis 17 angegeben. Nach einer dieser Varianten besteht das lineare Funktionselement dabei aus einem hochporösen Materialstreifen mit starker Benetzungsfähigkeit durch Schwefelsäure, deren Kapillardruck in den zusammenhängenden Poren die Flüssigkeit gegen die Schwerkraft um mindestens 50 cm Höhe ansaugt, wobei dieser Streifen anstelle einer Ionenaustauschermembran mit einem isolierenden Mantel fest umgeben ist.

Anspruch 18 gibt als erfindungsgemäßes Verfahren zur Fertigung einer Halbzelle für eine Ladezustandsanzeigevorrichtung mit einem erfindungsgemäßen linearen elektrochemischen Funktionselement folgende Fertigungsschritte vor:

a) Anfertigen eines becherförmigen Gefäßes aus einem in Schwefelsäure auf dem Potential der Blei/Bleisulfatelektrode beständigen Metall, insbesondere aus Kupfer oder Blei, durch Tiefziehen, Preßspritzen oder Formgießen;

b) Einbringen negativer Masse in Form einer Paste aus drei- oder vierbasischem Bleisulfat und Schwefelsäure;

c) Umwandlen der Paste in einen Bleischwamm durch elektrochemische Reduktion in Schwefelsäure unter Schaltung des Metallbechers als negativen Pol in einer Formationszelle;

d) Einführen des linearen Funktionselementes als galvanischen Schlüssel in den Metallbecher, danach spanlose Verformung des Metallbechers bis zur materialschlüssigen Umschließung des linearen Funktionselementes.

Schließlich realisiert die Erfindung ein Verfahren zur Regelung eines Akkumulators unter Verwendung eines erfindungsgemäßen linearen elektrochemischen Funktionselementes, mit folgenden Verfahrensschritten:

a) Ermittlung der Spannung U1,2 zwischen der Negativen und der Positiven als Zellspannung,

b) Ermittlung der Spannung U1,3 zwischen der Negativen und der Halbzelle.

c) Ermittlung der Spannung U2,3 zwischen der Positiven und der Halbzelle.

d) Laden mit hohem Ladestrom, bis die Spannung U1,3 das Spannungsplateau (U1,3 )$_{gas"}$ der beginnenden Wasserstoffentwicklung an der Negativen erreicht. Danach Absenkung des Ladestroms auf einen vorgegebenen Wert.

e) Abschalten des Ladestromes, wenn die Spannung U2,3 den Spannungswert (U2,3)gas der beginnenden Gasentwicklung der Positiven erreicht bzw. Absenken des Ladestromes auf einen Wert in der Nähe des Selbstentladestroms der Zelle.

Nachfolgend wird die Erfindung unter Bezug auf die Zeichnung näher beschrieben. Es zeigt:

Fig. 1 - 2     Darstellungen verschiedener Wasserstoffelektroden;

Fig. 3 - 5     Darstellungen verschiedener linearer elektrochemischer Funktionselemente;

Fig. 6 - 7     die Verwendung der linearen elektrochemischen Funktionselemente als Ladezustandsanzeigen;

Fig. 8     ein Verfahren zur Herstellung einer Ladezustandsanzeige unter Verwendung linearer elektrochemischer Funktionselemente.

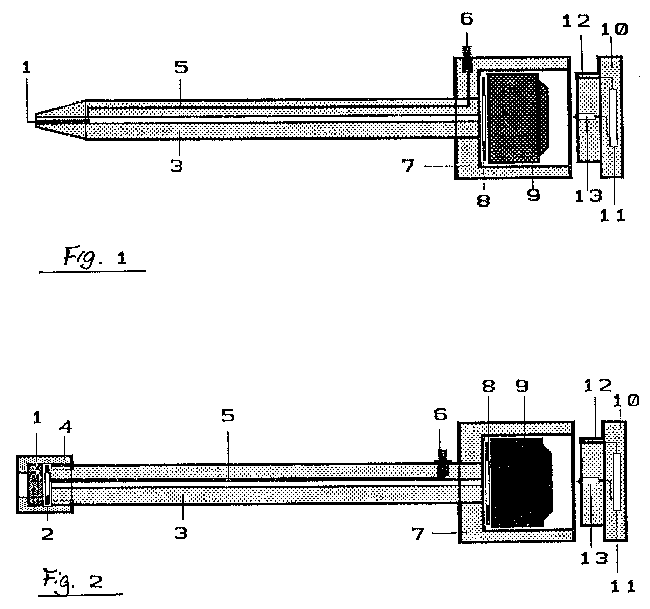

Nach Fig. 1 besteht die Wasserstoffelektrode 1 aus einem platinierten Platindraht, der sich in der Mündung eines spitz auslaufenden Wasserstoffrohres 3 aus Glas, Plexiglas oder einem anderen, möglichst für Wasserstoff undurchlässigem Material, befindet. Das andere Ende des Wasserstoffrohres ist in den eigentlichen Gaszellenbehälter 7 gasdicht eingeschraubt, eingesteckt oder eingeklebt. Dieser vorzugsweise zylindrische Gaszellenbehälter 7 nimmt die Wasserstoffentwicklungszelle 9 nach Art der DE-PS 35 32 335 auf. Sie enthält Zinkpulver oder Zinkgel und Kalilauge zusammen mit der sogenannten Wasserstoffentwicklungselektrode. Bei dieser ist eine mit PTFE gebundene Katalysatorschicht in ein Metallnetz eingewalzt und trägt auf der dem Zink abgewandten Seite eine feinporige PTFE-Folie auflaminiert. Die Zinkelektrode und die Wasserstoffentwicklungselektrode befinden sich in einem meist aus zwei voneinander isolierten Metallteilen zusammengesetzten Gehäuse, von denen das eine mit der Zinkelektrode, das andere mit der Wasserstoffentwicklungselektrode elektronenleitend verbunden ist. Das die Wasserstoffentwicklungselektrode enthaltende Gehäuseteil korrespondiert über mindestens eine Bohrung mit dem Inneren des Gasrohrs 3. Die Bohrung kann durch einen Aufkleber, der beim Betrieb der Zelle durch den Überdruck das Loch freigibt, abgedichtet sein. Der Aufkleber kann nach DE-Anm. 195 07 658.3 aus einer Metallfolie z. B. aus Kupfer bestehen.

Der Gaszellenbehälter 7 ist durch den aufgeschraubten oder aufgesteckten Deckel 10 geschlossen, der mehrere Funktionen übernehmen kann. So übt er nach dem Verschließen zweckmäßigerweise mittels elastischer Federelemente (nicht eingezeichnet) einen Druck auf die Zelle 9 aus, so daß diese mittels der ringförmigen Dichtung 8 über die erwähnte Bohrung im Zellgehäuseteil mit dem Gasrohr 3 korrespondiert. Diese Federelemente können die elektronischen Kontakte 12 und 13 sein, die die beiden Gehäuseteile kontaktieren. Ebenfalls trägt der Deckel 10 zweckmäßigerweise einen festen oder veränderlichen elektrischen Widerstand 11 in Serie zu einem Ein-Aus-Schalter, mit dem die Kontakte 12 und 13 verbunden sind. Das kann zum Beispiel ein Potentiometer mit "Aus"-Stellung sein. Statt mit dem Deckel kann dieser elektrische Schalt- und Stromregelkreis auch mit dem Gaszellenbehälter 7 fest verbunden sein.

Zur Vermeidung von Störungen durch Fremdgase führt man den Metalldraht von der Wasserstoffelektrode möglichst innerhalb des Wasserstoffrohres oder in dessen Mantel eingebettet bis zum Gaszellenbehälter, wo er in einer von außen zugänglichen Kontaktschraube 6 oder einer einpoligen Steckdose endet.

Platinelektroden sind besonders zur Verwendung in sauren Medien geeignet, weil sie in diesen auch allen oxidierenden Säuren widerstehen. Daneben sind aber auch viele andere Metalle der 8. Gruppe des Periodensystems der Elemente, deren Legierungen oder damit metallisierte, elektronenleitende Festkörper zur Verwendung geeignet, sofern sie die katalytischen Fähigkeiten zur chemisorptiven Spaltung des Wasserstoffmoleküls besitzen. Das gilt z.B. für Palladium und Iridium, doch auch für Aktivkohle, die mit diesen Metallen katalysiert ist. Hierbei zeichnen sich schwarze, großflächige Überzüge als besonders wirkungsvoll aus. In alkalischer und neutraler Lösung ist Nickel ein sehr wirksamer Wasserstoffkatalysator, besonders in Form des Raney-Nickels. Dieses ist ein pulverförmiges Material, das man aus einer Nickel/Aluminiumlegierung durch Extraktion des Aluminiums mit einer Alkalilauge erhält. Durch pulvermetallurgische Fertigungsverfahren lassen sich hieraus Wasserstoffelektrodenkörper herstellen. Derartige Verfahren sind in dem Buch von E. Just und A. Winsel, Brennstoffzellen-Fuel Cells, Steiner-Verlag, Wiesbaden 1962 und den darin genannten Patenten beschrieben. Für diesen Zweck geeignete Elektroden stellt man aber auch aus einem Katalysatorpulver durch intensives Mischen mit PTFE-Pulver in einer sehr schnell laufenden Messermühle und Einwalzen der Pulvermischung in ein Metallnetz her. Derartige Elektroden werden auch gern einseitig mit einer feinporigen, hydrophoben PTFE-Schicht versehen, die zum reagierenden Gas gekehrt ist und die Dreiphasengrenze Elektrode/Elektrolyt/Gas stabil hält. Derartige Elektrodenstrukturen sind in der EP-PS 144 002 (1983) beschrieben. Es kann jedoch vorteilhaft sein, die Speicherkapazität durch Verwendung sogenannter Hydridspeicherlegierungen neben dem Raney-Nickel zu verbessern, DE-OS 37 02 138 (1987).

In Fig.2 ist die Wasserstoffelektrode 1 eine derartige Gasdiffusionselektrode, die mit einem Metallring 2 kontaktiert ist und mittels der Haltekappe 4 auf dem Rohr 3 befestigt ist. Sie kann in beliebiger Lage in eine elektrochemische Meßzelle eingesetzt werden. Die Ankopplung der geschilderten Wasserstoffelektrode an das Meßobjekt in einer galvanischen Zelle ist durch die geometrische Form und den unflexiblen Aufbau bestimmt. Man wünscht sich jedoch eine Referenzelektrode, die man möglichst genau zum Abgriff einer Äquipotentialfläche auch in eine eng gebaute Primär- oder Akkumulatorzelle einbauen kann. Der Lösung dieser Aufgabe ist die vorliegende Erfindung gewidmet.

Definition: In einem Polyelektrolyt (PE) ist die eine Ionensorte makromolekular und vielwertig, während die Gegenionensorte aus den üblichen, leicht beweglichen Ionen besteht. Beide Ionensorten sind hydratisiert und nehmen in osmotischer Konkurrenz mit der Umgebung am Wasseraustausch teil. In Ionenaustauschern (IA) sind viele derartige makromolekulare Ionen durch kovalente Bindung zu wegen ihrer Größe unlöslichen Netzwerken verbunden; sie bestehen also aus Festionen und beweglichen Gegenionen, die nach dem Massenwirkungsgesetz abdissoziieren und durch Ionen des gleichen Vorzeichens ausgetauscht werden können. Nur diese beweglichen Gegenionen können zum elektrischen Transport beitragen; die unbeweglichen Festionen tragen zur Leitfähigkeit nicht bei. Es gibt Anionenaustauscher (AIA) mit beweglichen Anionen als Gegenionen und einem polyvalent-kationischen Festkörper und Kationenaustauscher (KIA) mit beweglichen Kationen als Gegenionen und einem polyvalent-anionischen Festkörper. Ionenaustauscher-Membranen (IAM) sind homogen oder inhomogen aufgebaute Membrankörper, die auf Grund ihrer Austauscherwirkung nur die Gegenionen am elektrischen Strom- und elektrodalytischen Stofftransport beteiligen. Im allgemeinen schließt der Ionenaustauscher das Eindringen von Ionen des gleichen Vorzeichens wie das der Festionen aus. Beim Einsatz von Ionenaustauschern und Ionenaustauscher-Membranen in hochkonzentrierten Lösungen insbesondere starker Elektrolyte werden mit dem Hydratationswasser auch Fremdionen gleichen Vorzeichens wie die Festionen in den Festkörper eingeschwemmt, die mit zum elektrischen Strom- und elektrodialytischen Stofftransport beitragen. In jedem Fall ist aber in noch so kleinen räumlichen Elementen von IA und IAM die Ladungsbilanz im zeitlichen Mittel neutral. Wegen der umfangreichen Literatur über IA und IAM sei verwiesen auf "Römpp Chemie Lexikon", Bd.3, Hrsg.: Jürgen Falbe; Manfred Regitz (1995), Verlag G. Thieme, Stuttgart.

Das Quellungsverhalten von IA und IAM wird durch den Wasserhaushalt bestimmt. Man kann es zur Konzentrationsmessung in wäßrigen Lösungen benutzen. Eine einfache Darstellung der hierbei auftretenden Vorgänge ist in dem folgenden Aufsatz gegeben: A. Winsel "Konzentrationsmessungen mit Ionenaustauscher-Membranen", Chemie-Ing.-Techn. $\underline{44}$, (1972) 163-167.

Denkt man sich einen IA oder eine IAM in ein festes und undeformierbares Gehäuse mit Wänden eingeschlossen, die zwar für Wasserdampf durchlässig doch für wasserfremde Moleküle undurchlässig sind, so stellt sich ein hydrostatisches Druckgefälle zwischen Innen- und Außenraum ein. Dieses ist gleich der osmotischen Druckdifferenz zwischen dem IA bzw. IAM und der umgebenden Lösung. Ist das osmotische Druckgefälle immer so gerichtet, daß der eingeschlossene IA der Umgebung Wasser entziehen will, so kann sich der IA weder in seiner Ionenkonzentration noch in seinem Wassergehalt und den übrigen Daten wesentlich ändern.

Es gibt eine Vielzahl von Ionenaustauschern und Ionenaustauscher-Membranen. So kann der polyvalente Festkörper ein starker Säurerest [- $SO_3^-$]$_n$ oder ein schwacher Säurerest [- COO-]$_n$ sein; er kann aber auch eine starke [-$N(CH_3)^+$]$_n$ oder schwache Base [-$N(CH_2)^+$]$_n$ sein. Jeweils neutralisiert mit den entsprechenden Gegenionen haben wir es mit einer Vielzahl von Salzen zu tun. Sie können entsprechend den jeweiligen Massenwirkungsgesetzen dissoziieren und den elektrischen Strom leiten. In geeigneter Kombination sind sie Puffersubstanzen, die einen engen pH-Wert einstellen. In der Elektrochemie hat sich in den letzten Jahrzehnten die von W. Grot erfundene Nafion-Membran, eine Poly(perfluoralkylen)-sulfonsäure, besonders bewährt. NAFION ist ein Warenzeichen der Firma Du Pont. Das Nafion-Material gibt es als Pulver und als Lösung. Ionenaustauscher-Membranen aus Nafion-Material gibt es freitragend oder auf PTFE-Gewebe aufgeschweißt. Membranartige Ionenaustauscher lassen sich auf verschiedene Art herstellen. Nach unserer Erfahrung geht dies besonders einfach, wenn man das pulverförmiges Ausgangsmaterial eines IA mit PTFE-Pulver in einer schnell laufenden Messermühle mischt (reaktives Mischen) und aus dem watteartigen Material in einer Walze ein Fell ausformt. Dieses IAM-Fell besteht in einem weiten Zusammensetzungsbereich aus einem zusammenhängenden, kaltverschweißten Ionenaustauschergerüst in einem netzartigen PTFE-Gespinst. Sowohl mit als auch ohne thermische Nachbehandlung bildet sich innerhalb des IAM-Körpers trotz der hydrophoben Wirkung des PTFE durch Quellung eine elektrolytische Leitstruktur heraus. Durch Beimischung von pulverförmigen Puffersalzen kann man dafür sorgen, daß die Ionenkonzentration bzw. der pH-Wert innerhalb der IAM sich im Anwendungsfall nur wenig ändert.

Durch Beimischung von Katalysatorpulvern für die Wasserstoffreaktion lassen sich biporöse Strukturen herstellen, in denen das IA-Gerüst den Elektrolyt und das Katalysatorgerüst den Elektronenleiter bildet. Das jeweilige Gas kann in dem hydrophoben Bereich der PTFE-Struktur strömen. Als Katalysatorpulver dient besonders Aktivkohle allein oder als Träger von Edelmetallkatalysatoren aus Platin, Palladium, Nickel oder anderen Metallen oder Legierungen. Es können aber auch metallische Katalysatoren als hochporöse Pulver verwendet wie zum Beispiel die Raney-Metalle. Man erhält diese als Restmetalle, indem man aus einer pulverförmigen Legierung eine Legierungskomponente herauslöst.

Wir haben gefunden, daß man aus Ionenaustauscher-Membranen nützliche lineare Leitgebilde herstellen kann, die sowohl formstabil als auch pH-Wert stabil sind. Zu diesem Zweck wird ein Streifen aus einer IAM ausgeschnitten, in die passende Nut eines Gießwerkzeuges gelegt und allseitig in ein Gießharz eingebettet. So entsteht ein elektrolytischer Leiter von z. B. 2 mm Breite und 1 mm Dicke, der an den beiden Enden offen ist und den man als Elektrolytschlüssel bei elektrochemischen Messungen verwenden kann. Er ist biegsam und läßt sich zum Beispiel in den Plattensatz einer Starterbatterie einsetzen. Als Verbindung zu einer Referenzelektrode (galvanischer Schlüssel) kann man auf diese Weise das Polarisationverhalten der beiden Elektroden der Akkumulatorzelle genau während der Ladung und der Entladung der Zelle verfolgen.

Um einen besonders stabilen linearen Leiter zu bekommen, kann man den IAM-Streifen auch in ein rundes oder flaches Metallrohr einbringen, das eine passive Oberfläche besitzt. Dies ist zum Beispiel bei Titan der Fall, weil Titan sich mit einer nichtleitenden und unlöslichen Schicht von $TiO_2$ überzieht. Auch eloxiertes Aluminium hat die Eigenschaft, gegen viele Lösungen passiv zu sein. Um Reaktionen an der Außenfläche des Rohres auszuschließen, kann man diese mit einer Lack oder Harzschicht isolierend überziehen. Dafür kann man auch einen polymeren Schrumpfschlauch aus Polyethylen oder Polyvinylchlord benutzen, der im Inneren noch eine Schicht aus Gießharz besitzen kann.

In vielen Fällen ist es vorteilhaft, den IAM-Streifen mit oder ohne Gießharz direkt in einen Schrumpfschlauch einzulegen und in einem heißen Luftstrom zu schrumpfen, wobei zugleich das Gießharz aushärtet. Die Erwärmung kann auch unter einem heißen Bügeleisen oder in einer heißen Walze erfolgen, um einen linearen Ionenleiter mit isolierender Umhüllung herzustellen.

Wir haben gefunden, daß man auch aus Gaselektroden nützliche lineare Leitgebilde herstellen kann, die sowohl formstabil als auch potentialstabil sind. Zu diesem Zweck wird ein Streifen aus einem Elektrodenband ausgeschnitten, in die passende Nut eines Gießwerkzeuges gelegt und allseitig in ein Gießharz eingebettet. So entsteht ein elektronisch leitender, katalytisch wirkender, Elektrolyt ansaugender Streifen von z. B. 2 mm Breite und 1 mm Dicke, der an den beiden Enden offen ist. Auf der einen Seite kann man ihn mit Wasserstoff versorgen und elektrisch kontaktieren, während man ihn auf der anderen Seite in den Elektrolyten der Meßzelle eintauchen läßt. Das Band ist biegsam und läßt sich zum Beispiel in den Plattensatz einer Starterbatterie oder einer Brennstoffzelle als Referenzelektrode einsetzen. So kann man das Polarisationsverhalten der beiden Elektroden während einer Belastung der Meßzelle verfolgen.

Um einen besonders stabilen linearen Aufbau zu bekommen, kann man den Elektrodenstreifen auch in ein flaches Metallrohr einbringen, das eine beim Potential der Gaselektrode passive Oberfläche besitzt. Dies ist zum Beispiel im Falle der Wasserstoffelektrode bei Kupfer und Nickel und allen Edelmetallen der Fall. Auch Titan, das sich mit einer nichtleitenden und unlöslichen Schicht von $TiO_2$ überzieht, kann man benutzen. Auch eloxiertes Aluminium hat diese Eigenschaft, gegen viele Lösungen passiv zu sein. Um auch hier Reaktionen an der Außenfläche des Rohres auszuschließen, kann man diese mit einer Lack oder Harzschicht isolierend überziehen. Dafür kann man auch einen polymeren Schrumpfschlauch aus Polyäthylen oder Polyvinylchlord benutzen. In vielen Fällen ist es vorteilhaft, den Elektrodenstreifen direkt in einen Schrumpfschlauch einzulegen und in einem heißen Luftstrom oder unter einem Bügeleisen oder in einer heißen Walze eine lineare Gaselektrode mit isolierender Umhüllung herzustellen.

Für die geschilderte Gestaltung eines linearen Elektrodenstreifens sind praktisch alle Strukturen von Gaselektroden geeignet. Sie können nur aus einem Walzfell bestehen. Dazu hat man Katalysatorpulver und PTFE-Pulver reaktiv gemischt und in einer Walze ausgeformt Zusätzlich kann die Elektrode aber auch ein Metallnetz enthalten, wodurch die elektrische Leitfähigkeit in Streifenrichtung verbessert wird. Sie kann auch eine PTFE-Folie auflaminiert enthalten, um die Längsströmung des Reaktionsgases zu erleichtern. Interessant für die noch näher zu beschreibenden Anwendungen sind solche lineare Gebilde, in denen IAM-Streifen und Gaselektrodenstreifen - sich überlappend - eine Halbzelle bilden. Es ist vorteilhaft, wenn die Überlappungszone durch Pressen oder Heißpressen innig verschweißt ist. Die Wasserstoffelektrode arbeitet dann in einem IA-Elektrolyten, der durch die Art und Konzentration des lonenaustauschers vorgegeben ist und als Standard benutzt werden kann. Die einzelnen linearen Funktionselemente und ihre Ankopplung an die Wassertstoff-Stabelektrode mit integrierter Wasserstoffquelle soll nunmehr in einigen Beispielen beschrieben werde. Dabei wird der Einfachheit halber der obere Teil des Gasrohres zusammen mit dem Behälter für die Gasentwicklungszelle als konstantes Bauteil angesehen.

In Fig.3 ist gezeigt, wie man die in Fig.2 dargestellte Wasserstoff-Stabelektrode mit einer zungenartigen Spitze 14 versehen kann. Der Schnitt A-A veranschaulicht den streifenartigen Charakter des linearen IAM-Elementes. Es ist in die Haltekappe 4 dicht eingesteckt oder eingeklebt und kontaktiert elektrolytisch die Wasserstoffelektrode 1. Das vordere Ende der Zunge tastet das Elektrodenpotential in der Meßzelle ab.

In Fig. 4 besteht das lineare Funktionselement aus einer linearen Halbzelle, die aus einem IAM-Streifen 16 und einem galvanisch verbundenen Elektrodenstreifen 17 gebildet ist. Beide sind in ein Gießharz eingebettet und mit einem Schrumpfschlauch 15 auf das Wasserstoffrohr aufgesteckt. Bezugszeichen 18 veranschaulicht "das abgebrochene" Wasserstoffrohr mit dem Kontaktdraht, der das Elektrodenpotential zur Meßklemme leitet.

Bei der Herstellung wurde der Schrumpfschlauch auf das mit Epoxidharz eingestrichene Rohrende aufgesteckt und das ebenfalls mit Epoxydharz bestrichene lineare Halbzellenelement eingelegt. In einem Heißluftgebläse wurde der Schlauch geschrumpft und das Harz gleichzeitig ausgehärtet. Mit dieser eleganten Methode lassen sich vielfältige Kombinationen von IAM und Elektroden als lineare Funktionselemente herstellen und mit Schraub- oder Steckadaptern an elektrochemischen Meßvorrichtungen anbringen.

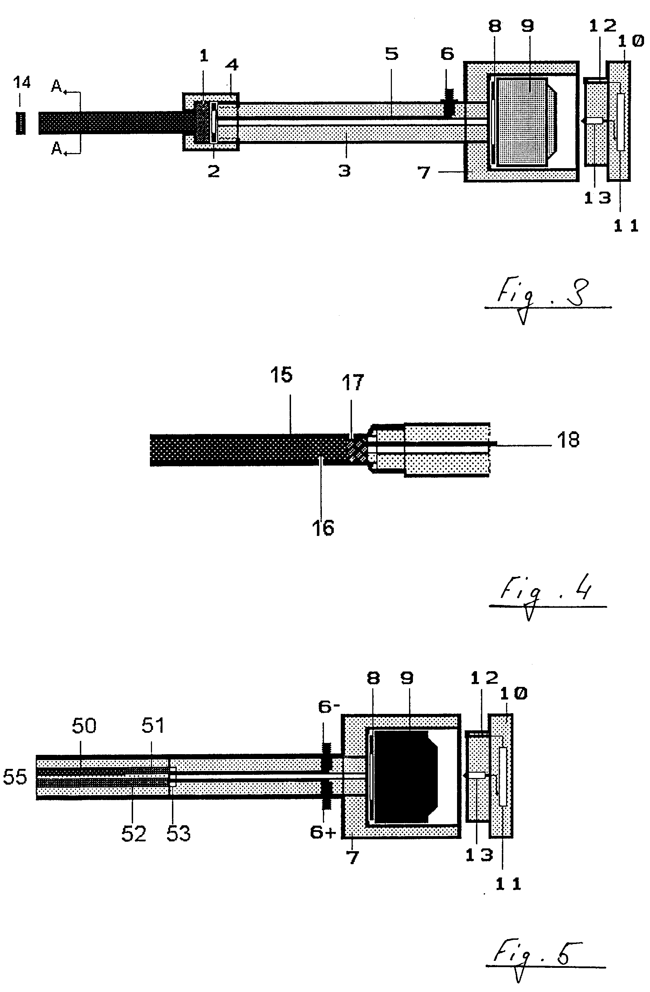

In Fig. 5 ist eine neuartige Vorrichtung gezeigt, die sich mit Hilfe der hier beschriebenen linearen Funktionselemente realisieren läßt. Sie besteht aus drei linearen elektrochemischen Elementen 50, 51 und 52 in einem Wasserstoffrohr. Die IAM 50 bildet mit der Wasserstoffelektrode 51 eine lineare Halbzelle, die im Raum 53 mit Wasserstoff aus der Gasentwicklungsvorrichtung versorgt wird. Aus dem Raum 53 bezieht auch die Wasserstoffelektrode 52 ihr Gas. Die Wasserstoffelektrode 51 ist mit der Kontaktschraube 6+ und die Wasserstoffelektrode 51 mit der Kontaktschraube 6-verbunden. Beim Eintauchen der Gerätespitze 55 in eine Elektrolytlösung mißt man an den Klemmen 6+,6- eine Spannung, die den pH-Wert der Lösung in Relation zu dem der IAM 50 widerspiegelt. Fließt im Meßelektrolyten ein Strom, so herrscht vor 55 zusätzlich ein Potentialgefälle, das sich der Messung überlagert. Die Komponente dieses Feldes, die Parallel zur Stirnfläche 55 vorhanden ist und zur Spannung 6+,6-einen entsprechenden Beitrag liefert, kehrt diesen Spannungsbeitrag bei Drehung des Gerätes um 180° um. Auf diese Weise kann man die Anteile von eingeprägter und Reaktionsspannung in (6+,6-) identifizieren.

Die gemeinsame Versorgung der beiden Wasserstoffelektroden aus einer Quelle eliminiert die Einflüsse von Wasserstoffdruck und Wasserstofftemperatur, die für beide gleich sind. Es gehört sicherlich nicht viel Phantasie zu der Vorstellung, das sich in einem Gasrohr anstelle der einen Halbzellenkombination (50,51) deren mehrere befinden, die sich durch unterschiedliche IAM, das heißt durch unterschiedliche pH-Werte auszeichnen. Die entsprechenden linearen Funktionselemente können revolverförmig um eine Wasserstoffelektrode angeordnet sein. Sie können in Höhe der Klemmen (6+) und (6-) in einen Kranz von Kontakten münden an denen man eine Spannung jeweils paarweise abgreifen kann. Dadurch ergibt sich auch die Möglichkeit der Anpassung des Meßstandards an den pH-Wert der Objektlösung.

Die Ausdehnungen der linearen Elemente, die weiter oben mit 2 mm Breite, 1,5 mm Dicke und beliebiger Länge angegeben sind, entsprechen dem oftmals gewünschten technischen Bedarf. Sie entsprechen jedoch auch der Anpassung an einfache Meßinstrumente mit üblichem Innenwiderstand. Interessante Anwendungen entstehen jedoch durch die Miniaturisierung bei der medizinischen Anwendung, da auch die geregelte Wasserstoffquelle kleiner als eine schluckbare Tablette sein kann. Die hier geschilderten linearen Funktionselemente lassen zunächst keine untere Grenze in den Ausdehnungen erkennen.

Eine einfache Anwendung findet die Erfindung bei der Ermittlung und Anzeige des Ladezustandes in Bleiakkumulatoren. Da die Schwefelsäure einer Akkumulatorzelle ein Teil der aktiven Masse ist und bei der Entladung als Bleisulfat gebunden wird, gibt ihre Konzentration sehr genau die noch entnehmbare Ladung an. In der modernen Akkumulatortechnik werden jedoch mehr und mehr Systeme verwendet, bei denen der Elektrolyt in vliesartigen Separatoren oder als Gel festgelegt ist. Dann korreliert die außerhalb des Plattensatzes zugängliche Säure nur schlecht mit dem aktuellen Ladezustand. Diese Erfindung der linearen Funktionselemente versetzt uns in die Lage, das eine Ende in den Plattensatz zwischen einer positiven $PbO_2$-Elektrode und der negativen Pb-Elektrode einzufügen. Das kann sowohl der IAM-Streifen als auch ein Wasserstoffdiffusionselektroden-Streifen sein. Im Falle des IAM-Streifens kann dieser als galvanischer Schlüssel die Verbindung zu irgendeiner Referenzelektrode, vorzugsweise zu einer Wasserstoff-Stabelektrode wie in Fig. 3 herstellen. Im Falle der Wasserstoffelektrode hat sich die Anordnung gemäß Fig. 4 bewährt. Die Spannung zwischen der negativen Bleielektrode der Akkumulatorzelle und der Referenzelektrode kann unter Berücksichtigung der Konstruktionsdaten der Akkumulatorzelle direkt in Einheiten der noch zur Verfügung stehenden Ladungsmenge ausgewiesen werden.

Vorstehend wurde beschrieben, wie man aus Ionenaustauscher-Membranen (IAM) nützliche lineare Leitgebilde herstellen kann, die sowohl formstabil als auch pH-Wert stabil sind. Zu diesem Zweck wird ein Streifen aus einer IAM ausgeschnitten, in die passende Nut eines Gießwerkzeuges gelegt und allseitig in ein Gießharz eingebettet.

So entsteht ein elektrolytischer Leiter von z. B. 2 mm Breite und 1 mm Dicke, der an den beiden Enden offen ist und den man als Elektrolytschlüssel bei elektrochemischen Messungen verwenden kann. Er ist biegsam und läßt sich zum Beispiel in den Plattensatz einer Starterbatterie einsetzen. Als Verbindung zu einer Referenzelektrode (galvanischer Schlüssel) kann man auf diese Weise das Polarisationverhalten der beiden Elektroden der Akkumulatorzelle genau während der Ladung und der Entladung der Zelle messend verfolgen.

Um einen besonders stabilen linearen Leiter zu bekommen, kann man den IAM-Streifen auch in ein rundes oder flaches Metallrohr einbringen, das eine passive Oberfläche besitzt. Dies ist zum Beispiel bei Titan der Fall, weil Titan sich mit einer nichtleitenden und unlöslichen Schicht von $TiO_2$ überzieht. Auch eloxiertes Aluminium hat die Eigenschaft, gegen viele Lösungen passiv zu sein. Um Reaktionen an der Außenfläche des Rohres auszuschließen, kann man diese mit einer Lack oder Harzschicht isolierend überziehen. Dafür kann man auch einen polymeren Schrumpfschlauch aus Polyethylen oder Polyvinylchlord benutzen, der im Inneren noch eine Schicht aus Gießharz besitzen kann.

In vielen Fällen ist es vorteilhaft, den IAM-Streifen mit oder ohne Gießharz direkt in einen Schrumpfschlauch einzulegen und in einem heißen Luftstrom zu schrumpfen, wobei zugleich das Gießharz aushärtet. Die Erwärmung kann auch unter einem heißen Bügeleisen oder in einer heißen Walze erfolgen, um einen linearen Ionenleiter mit isolierender Umhüllung herzustellen.

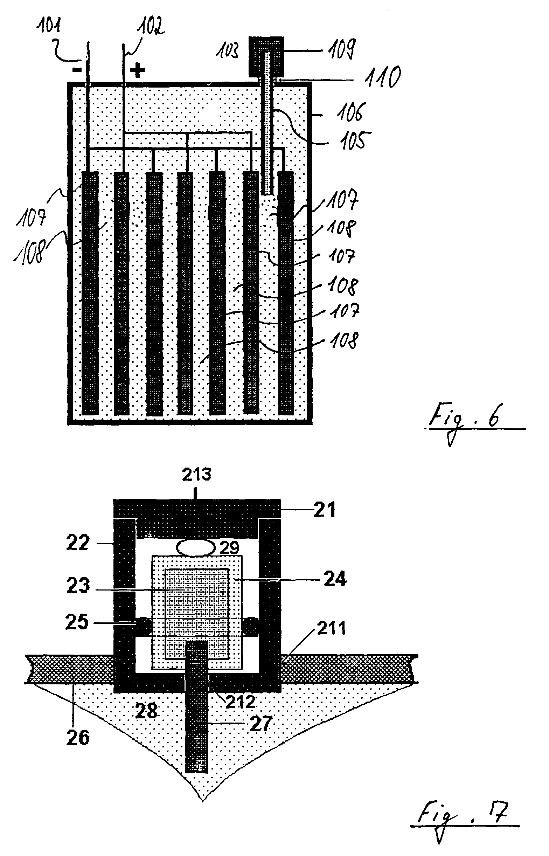

Besonders vorteilhaft wird die vorstehende Lehre zur Konstruktion einer Ladezustandsanzeige für Bleibatterien weiter ausgestaltet. Es stellte sich bei Versuchen nämlich heraus, daß - entgegen der Erwartung - der saure IAM nicht durch die Bleiionen des Bleiakkumulators schnell neutralisiert und unbrauchbar wird sondern hinreichend lange für einen wirtschaftlichen Einsatz gebrauchsfähig bleibt. Auf der Basis dieser Erkenntnis haben wir die jetzt an Hand der Figuren 6 bis 8 zu beschreibenden Ladezustandsanzeige entwickelt.

In Fig. 6 ist schematisch, doch recht wirklichkeitsnahe, die Zelle eines Bleiakkumulators dargestellt. Sie enthält im Gehäuse 106 vier negative Bleielektroden 107, die über eine Polbrücke mit dem negativen Anschlußpol 101 verbunden sind. Ferner enthält sie drei positive Elektroden aus $PbO_2$ 108 mit dem positiven Anschlußpol 102 in der Schwefelsäure 104. Die Schwefelsäure kann wahlweise flüssig oder in einem Kieselgel festgelegt sein. Wie in jedem Bleiakkumulator enthält die Zelle auch Separatoren zwischen den einzelnen Elektroden, die der besseren Übersicht wegen nicht eingezeichnet sind. Ob mit mikroporöser Struktur oder als Vlies ausgebildet, jeder Separator beeinflußt den Säurehaushalt der einzelnen Elektroden durch seine Elektrolytverdrängung und durch seinen Diffusions- und Migrationswiderstand. Diese Tatsache spielt jedoch für diese Erfindung nur eine nebensächliche Rolle.

In Fig.6 wird die Ladezustandserfassung durch die Halbzelle 103 ermöglicht, die mit dem linearen Funktionselement 105 als galvanischer Schlüssel in den Elektrolyten 104 der Zelle eintaucht. Die nützlichste Information über den aktuellen Ladezustand erhält man dann, wenn der galvanische Schlüssel zwischen einer positiven und einer negativen Elektrode endet. Eine vorteilhafte Position ist aber auch die Plattenmitte auf einer der Endplatten außerhalb des Plattensatzes.

Erfindungswesentlich ist die Ausgestaltung der Halbzelle 103, die aus einem metallischen Hohlkörper 109 als Ableiter besteht und im Innenraum einen hochporösen Bleischwamm und Schwefelsäure, die Komponenten der negativen Bleielektrode, enthält. An der Durchführung (110) ist die Einheit aus linearem Funktionselement und Halbzelle fest mit dem Batteriegehäuse fest verbunden.

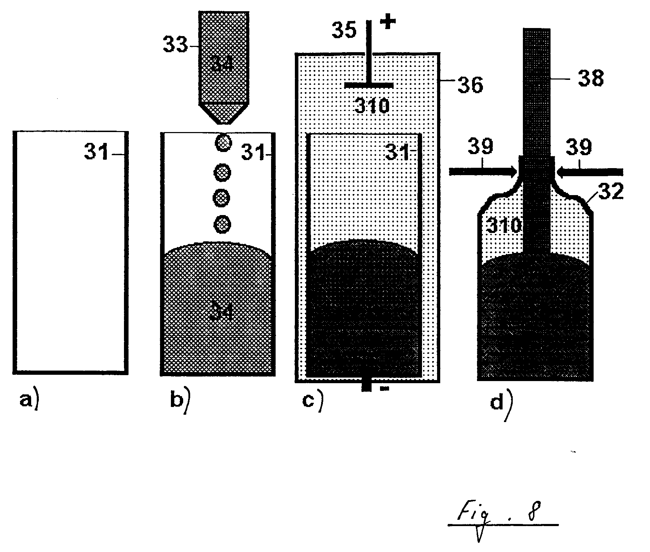

In Fig.7 ist eine beispielhafte Konstruktion näher dargestellt. Ein zylindrischer Kunststoffstopfen 22 ist mit dem Gewinde 211 in den Batteriedeckel 26 eingesetzt. In dem Kunstoffgehäuse befindet sich ein Bleibecher 24 mit der aktiven negativen Bleimasse 23, der das lineare Funktionselement 27 dicht eingefaßt enthält. Es reicht in die aktive Masse 23 hinein. Ein Rundschnurring 25 ermöglicht die gleitende Auf- und Figewegung des Bechers 23 und des damit fest verbundenen galvanischen Schlüssels 27 innerhalb des Elektrolyten 28. Die Feder 29 stellt den Kontakt zum metallischen Deckel 21 und dem Außenanschluß 213 her. Im Falle eines Kuststoffdeckels kann 213 auch eine durchgehender Kontaktschraube oder ein Kontaktniet sein.

Konstruktive Abwandlungen im Gegenstand der Fig. 7 liegen auf der Hand; sie müssen jedoch den folgenden Sachverhalt widerspiegeln: Die Halbzelle 103 am zweiten Ende des galvanischen Schlüssels 105 besteht aus einem weitgehend geschlossenen Hohlkörper aus Bleimetall oder verbleitem Kupfermetall, der im Innenraum poröse Bleimasse und in deren Porensystem festgelegte Schwefelsäure enthält. Das lineare Funktionselement mündet - den geschlossenen Hohlkörper durchdringend - als galvanischer Schlüssel in dem Innenraum. Für den metallischen Hohlkörper ist die Bedingung, daß das betreffende Metall auf dem Potential der negativen Bleielektrode nicht korrodiert. Angesichts der Tatsache, daß der metallische Hohlkörper auch mit der Außenluft in Berührung steht, sollte er auch dort Korrosionsgeschützt sein. Das kann man immer durch einen beständigen Kunststoffüberzug erreichen. So kann man mit einem Schrumpfschlauch zugleich das Funktionselement 27 in den Becher 24 einsiegeln wie auch die Funktion des Kunststoffgehäuses 22 herstellen.

Es ist wichtig, die Bauelemente einer Ladezustandsanzeige einfach herstellen zu können. Eine Möglichkeit dazu ist in Fig. 8 dargestellt. Sie zeigt die vier Phasen a, b, c, und d eines Fließbandprozesses. Zuerst stellt man einen Bleibecher von 0,5 bis 1 cm Durchmesser und 0,5 bis 2 cm Höhe durch Gießen, Spritzpressen oder Tiefziehen her. Die Wandstärke sollte möglichst 0,1 cm betragen. Für die Auswahl der Legierung ist die Korrosionsbeständigkeit wichtiger als die Härte. Deshalb wird man nach Möglichkeit Reinblei verwenden. Die kleinen Becher werden in ein Transportband oder in Lochbech als Halter eingesetzt. Fig.7 a zeigt den leeren Becher 31.

In der nächsten Station, Fig.7b, wird die aktive Masse als Paste 34 eingefüllt. Sie besteht aus Bleistaub (oxidiertes Blei mit hohem Oxidanteil) und Schwefelsäure. Die Paste wird eingestrichen oder aus einer Düse 33 eingespritzt. Nach einer Verweilzeit unter vorzugenden klimatischen Bedingungen wird der Becher in das Formationsbad, Fig.3c, aus Schwefelsäure eingesetzt. Der Behälter 36 des Formationsbades kann aus Bleiblech geformt sein und eine Vielzahl von Bechern 31 enthalten, mit denen er im elektronischen Kontakt ist. Die Gegenelektrode 35 wird isoliert durch den Formationstrog geführt und taucht in die Schwefelsäure 310 als Formationselektrolyt ein. Durch den Formationsstrom wird die Paste 34 in den Bleischwamm 37 umgewandelt. Nach diesem Fertigungsschritt werden die Becher gewaschen und mit voreingestellter Schwefelsäure, eventuell in Gelform, versehen. Das lineare Funktionselement 38 wird eingesteckt. Danach wird der Becher mit einer Dichtung verschlossen oder, wie in Fig.3d angedeutet, spanlos durch die Preßstempel 39 um das Element 38 herum verschlossen. Ideal hierfür ist ein - zumindest in diesem Bereich - zylindrisches lineares Element 38.

An einer Bleizelle, die mit der Erfindung ausgestattet ist, kann man zu jedem Zeitpunkt des Betriebes zwischen den Zellpolen der Negativen 101 und der Positiven 102 sowie der Halbzelle "103" zwei unabhängige Spannungswerte messen. Wir nennen diese U1,2, U1,3 und U2,3. Für diese Spannungen erwarten wir in der Ladephase die folgenden Vorzeichen:

$$U1,2 > 0 \; ; \; U1,3 > 0; \; U2,3 \; '<0.$$

In der Endladephase ist entsprechend:

$$U1,2 > 0 \; ; \; U1,3 < 0; \; U2,3 \; '<0$$

Die Spannung U1,3 durchläuft zwischen Ladung und Entladung den Spannungswert Null im unbelasteten Fall, sofern die Elektrolytkonzentration in der Negativen Elektrode und in der Halbzelle übereinstimmen. Das nahezu übereinstimmende Elektrodenpotential zwischen der Halbzelle 103 und der Negativen 101 macht die Spannung U1,3 'zu einem empfindlichen Indikator für den Zustand der Zelle. Beim Laden läuft diese Spannung von positiven Werten vor Beginn der Ladung zum Wert Null, wenn die Negative voll geladen ist. Die beginnende Wasserstoffabscheidung läßt sie dann auf einen negativen Wert U1,3,gas springen. Dieses Ereignis macht man zum Anlaß für das Absenken des Ladestromes, um im weiteren Verlauf auch die Positive in den Volladungszustand zu bringen. Jetzt ist U2,3 die wesentliche Spannung, die den Einblick in die weiteren Vorgänge des Akkus gestattet. Mit der beginnenden Sauerstoffentwicklung an der Positiven transitioniert diese Spannung auf den Wert U2,3,gas, bei dem nun der Ladestrom abgestellt oder auf den kleinen Wert der Ladungserhaltung abgesetzt werden kann.

Bei der Entladung zeigt die Spannung U1,3 ' in den Strompausen im wesentlichen die Elektrolytkonzentration in der Negativen an. Allerdings liegt diese wegen der notwendigen Eindiffusion in das Porengerüst über derjenigen, die sich nach langer Wartezeit einstellen würde. Der Amperestundenzähler zeigt einen abweichenden Wert an. Man kann sich diesen Umstand nach der in der **DE-PS 32 16 412** offenbarten Lehre zunutze machen, um die zur Verfügung stehende Sofortkapazität zu jedem Zeitpunkt zu rechnen und anzuzeigen.

Unter Inkaufnahme von Nachteilen kann das lineare Funktionselement aus einem hochporösen Materialstreifen mit starker Benetzungsfähigkeit durch Schwefelsäure bestehen, dessen Kapillardruck in den zusammenhängenden Poren die Flüssigkeit gegen die Schwerkraft um mindestens 50 cm Höhe ansaugt. Dieser Streifen muß als lineares Funktionselement mit einem isolierenden Mantel fest umgeben sein.

**Patentansprüche**

1. Lineares elektrochemisches Funktionselement, mit

   a) einem an den Enden zugänglichen elektrochemischen Funktionselement-Streifen mit einer ionen- und/oder elektronenleitenden Struktur,

   b) wobei der Funktionselement-Streifen vorzugsweise von einem Mantel bzw. einer Mantelfläche aus einem festen Material isolierend eingeschlossen ist.

2. Lineares elektrochemisches Funktionselement, insbesondere nach Anspruch 1, **dadurch gekennzeichnet, daß** es bzw. der Funktionselement-Streifen aus einer streifenförmigen, an den Enden zugänglichen lonenaustauschermembran (IAM) besteht, die vorzugsweise allseitig von einem Mantel aus einem festen Material isolierend eingeschlossen ist.

3. Lineares elektrochemisches Funktionselement, insbesondere nach Anspruch 1, **dadurch gekennzeichnet, daß** es es bzw. der Funktionselement-Streifen aus einer streifenförmigen, an den Enden zugänglichen Wasserstoff-Diffusionselektrode besteht, die vorzugsweise allseitig von einem Mantel aus einem festen Material isolierend eingeschlossen ist.

4. Lineares elektrochemisches Funktionselement, insbesondere nach Anspruch 1, **dadurch gekennzeichnet, daß** es es bzw. der Funktionselement-Streifen aus einer streifenförmigen, an den Enden zugänglichen Halbzelle, gebildet aus einer Ionenaustauschermembran und einer Wasserstoff-Diffusionselektrode, besteht, die vorzugsweise allseitig von einem Mantel aus einem festen Material isolierend eingeschlossen ist.

5. Lineares elektrochemisches Funktionselemente nach einem der Ansprüche 2 bis 4, **dadurch gekennzeichnet, daß** der den Funktionselement-Streifen vorzugsweise allseitig umschließende Mantel aus einem Metall mit passivierter Oberfläche besteht.

6. Lineares elektrochemisches Funktionselemente nach einem der Ansprüche 2 bis 4, **dadurch gekennzeichnet, daß** der den Funktionselement-Streifen vorzugsweise allseitig umschließende Mantel aus einem Kunstharz, zum Beispiel aus einem Gießharz besteht.

7. Lineares elektrochemisches Funktionselement nach einem der Ansprüche 3 bis 6, **dadurch gekennzeichnet, daß** der Funktionselement-Streifen mit seiner am einen Ende zugänglichen Wasserstoff-Diffusionselektrode mit einer Wasserstoffquelle verbunden ist.

8. Lineares elektrochemisches Funktionselement nach einem der Ansprüche 2 bis 7 zur Verwendung in einer Meßelektrode, **dadurch gekennzeichnet, daß** der Funktionselement-Streifen in ein Wasserstoffrohr einer Wasserstoff-Stabelektrode mit integrierter Wasserstoffquelle, vorzugsweise nach Art der DE-PS 41 12 784.6 und der PCT/EP92/00597, eingebaut ist.

9. Lineares elektrochemisches Funktionselement nach einem der Ansprüche 2 bis 7 zur Verwendung in einer Meßelektrode, **dadurch gekennzeichnet, daß** mehrere Funktionselement-Streifen nach Art des Anspruches 4 mit einem Funktionselement-Streifen nach Art des Anspruches 3 gemäß Anspruch 8 in das Wasserstoffrohr einer Wasserstoff-Stabelektrode mit integrierter Wasserstoffquelle, vorzugsweise nach Art der DE-PS 41 12 784.6 und der PCT/EP92/00597, eingebaut sind.

10. Lineares elektrochemisches Funktionselement nach einem der Ansprüche 2 bis 7 zur Verwendung in einer elektrochemischen Zelle zur Messung des pH-Wertes und/oder der Konzentration der Lösung in einem elektrochemischen Objekt mit einer eigenen Elektrode als Halbzelle und einer Referenzelektrode in Gestalt einer Wasserstoff-Stabelektrode mit integrierter Wasserstoffquelle, **dadurch gekennzeichnet, daß** ein lineares elektrochemisches Funktionselement, insbesondere nach Art von einem der Ansprüche 1 bis 4 als galvanischer Schlüssel die Wasserstoff-Stabelektrode mit dem Elektrolyten des Meßobjekts verbindet und die Spannung zwischen der objekteigenen Elektrode und der Wasserstoff-Stabelektrode meßbar ist.

11. Lineares elektrochemisches Funktionselement nach Anspruch 10, **dadurch gekennzeichnet, daß** das Meßobjekt eine Bleiakkumulatorzelle und deren Bleielektrode die Halbzelle ist.

12. Lineares elektrochemisches Funktionselement nach Anspruch 11, **dadurch gekennzeichnet, daß** die Spannung zwischen der Bleielektrode und der Wasserstoff-Stabelektrode als Ladezustandswert der Akkumulatorzelle umgerechnet und ausgewiesen wird.

13. Lineares elektrochemisches Funktionselement nach einem der Ansprüche 2 oder 5 bis 7 zur Verwendung in einer Ladezustandsanzeige für Bleiakkumulatorzellen,
**dadurch gekennzeichnet, daß**

    a) das erste Ende des linearen Funktionselementes mit einer Öffnung als galvanischer Schlüssel in den Elektrolyten der Akkumulatorzelle taucht,

    b) das zweite Ende des linearen Funktionselementes in den Elektrolyten einer Halbzelle mündet,

    c) wobei die Halbzelle die Komponenten einer Bleielektrode enthält und aus einem Bleigitter als Ableiter, negativer poröser Masse und Schwefelsäure als Elektrolyt besteht, und

    d) daß die Spannung zwischen dem Ableiter der Halbzelle und einer der Elektroden der Akkumulatorzelle als Rechenwert zur Bestimmung des Ladezustandes der Akkumulatorzelle gemessen wird.

14. Lineares elektrochemisches Funktionselement nach Anspruch 13, **dadurch gekennzeichnet, daß** die Halbzelle am zweiten Ende des galvanischen Schlüssels aus einem weitgehend geschlossenen Hohlkörper aus Bleimetall besteht, der im Innenraum poröse Bleimasse und in deren Porensystem festgelegte Schwefelsäure enthält und daß das lineare Funktionselement als galvanischer Schlüssel in den Innenraum, den geschlossenen Hohlkörper durchdringend, einmündet.

15. Lineares elektrochemisches Funktionselement nach Anspruch 13 oder 14, **dadurch gekennzeichnet, daß** die Halbzelle in den Verschlußstopfen der Akkumulatorzelle integriert ist.

16. Lineares elektrochemisches Funktionselement, insbesondere nach einem der Ansprüche 13 bis 15, **dadurch gekennzeichnet, daß** die Halbzelle in den Verschlußstopfen jener Akkumulatorzelle der Batterie integriert ist, die dem negativen Batteriepol enthält und das die Spannung zwischen dem negativen Batteriepol und der Halbzelle als Maß für den Ladezustand der ganzen Batterie pars pro toto genommen wird.

17. Lineares elektrochemisches Funktionselement nach einem der Ansprüche 13 bis 16, **dadurch gekennzeichnet, daß** das lineare Funktionselement aus einem hochporösen Materialstreifen mit starker Benetzungsfähigkeit durch Schwefelsäure besteht, deren Kapillardruck in den zusammenhängenden Poren die Flüssigkeit gegen die Schwerkraft um mindestens 50 cm Höhe ansaugt und daß dieser Streifen anstelle einer Ionenaustauschermembran mit einem isolierenden Mantel fest umgeben ist.

18. Verfahren zur Fertigung einer Halbzelle für eine Ladezustandsanzeigevorrichtung mit einem linearen elektrochemischen Funktionselement nach einem der vorstehenden Ansprüche, **gekennzeichnet durch** die folgenden Fertigungsschritte (Fig. 3):

   a) Anfertigen eines becherförmigen Gefäßes aus einem in Schwefelsäure auf dem Potential der Blei/Bleisulfatelektrode beständigen Metall, insbesondere aus Kupfer oder Blei, durch Tiefziehen, Preßspritzen oder Formgießen;

   b) Einbringen negativer Masse in Form einer Paste aus drei- oder vierbasischem Bleisulfat und Schwefelsäure;

   c) Umwandlen der Paste in einen Bleischwamm durch elektrochemische Reduktion in Schwefelsäure unter Schaltung des Metallbechers als negativen Pol in einer Formationszelle;

   d) Einführen des linearen Funktionselementes als galvanischen Schlüssel in den Metallbecher, danach spanlose Verformung des Metallbechers bis zur materialschlüssigen Umschließung des linearen Funktionselementes.

1. Verwendung einer Ladezustandsanzeige mit einem linearen elektrochemischen Funktionselement nach einem der vorstehenden Ansprüche zur Regelung eines Akkumulators, mit folgenden Verfahrensschritten:

   a) Ermittlung der Spannung U1,2 zwischen der Negativen (101) und der Positiven (102) als Zellspannung;

   b) Ermittlung der Spannung U1,3 zwischen der Negativen (101) und der Halbzelle (103);

   c) Ermittlung der Spannung U2,3 zwischen der Positiven (102) und der Halbzelle (103);

   d) Laden mit hohem Ladestrom, bis die Spannung U1,3 das Spannungsplateau (U1,3 )$_{gas"}$ der beginnenden Wasserstoffentwicklung an der Negativen erreicht, danach Absenken des Ladestroms auf einen vorgegebenen Wert;

   e) Abschalten des Ladestromes, wenn die Spannung U2,3 den Spannungswert (U2,3)gas der beginnenden Gasentwicklung der Positiven (2) erreicht bzw. Absenken des Ladestromes auf einen Wert in der Nähe des Selbstentladestroms der Zelle.

Fig. 1

Fig. 2

Fig. 3

Fig. 4

Fig. 5

101   102   103   109   110

106
105

107
108

107
108
107
108
107
108

Fig. 6

213

21

22

29

23   24

25

211

26   28   212   27

Fig. 7

33

35 **+**

36

310

31

31

31

38

39 39

32

310

a)

b)

c)

d)

*Fig . 8*